# EUROPÄISCHE PATENTSCHRIFT

(11) **EP 3 388 596 B1**
(45) Veröffentlichungstag und Bekanntmachung des Hinweises auf die Patenterteilung: **24.06.2020**
(21) Anmeldenummer: 17160706.2
(22) Anmeldetag: 14.03.2017
(51) Int. Cl.: E04G 15/06, F16L 3/22, F16L 5/02

(54) **SCHALUNGSKASTEN**
FORMWORK CASE
BOÎTIER À COQUE

(43) Veröffentlichungstag der Anmeldung: 17.10.2018
(73) Patentinhaber: Georg Fischer JRG AG, 4450 Sissach (CH)
(72) Erfinder: Schwarz, Oliver, 78315 Radolfzell (DE); Heer, Peter, 79807 Lottstetten (DE); Porfido, Erasmo, 8234 Stetten (CH)
(74) Vertreter: Fenner, Seraina

(56) Entgegenhaltungen:
- EP-A1- 2 194 212
- EP-A1- 3 026 766
- DE-A1- 3 706 936

## Beschreibung

Die Erfindung betrifft einen Schalungskasten zur Befestigung an einer Schalungsplatte um eine Aussparung in zu betonierende Wände oder Decken vorzusehen, beinhaltend ein Schalungsgehäuse, wobei das Schalungsgehäuse Rohrführungskanäle aufweist, wobei die Rohrführungskanäle der Führung der eingeführten Schutzrohre dienen, wobei das Schalungsgehäuse eine Eintrittsseite und eine Abschlussseite aufweist und vorzugsweise einteilig ausgebildet ist, wobei die Eintrittsseite Eintrittsöffnungen zur Einführung der Schutzrohre aufweist.

Üblicherweise werden heute flexible Wasserleitungen in Sanitärinstallationen in Schutzrohre eingezogen, die grösstenteils einbetoniert werden. Um einen Zugang zu den Schutzrohren auch nach dem Betonieren zu gewährleisten sind Schalungskästen vorzusehen. Dazu wird der Schalungskasten vor dem Betonieren auf der Verschalungsplatte fixiert, vorzugsweise durch annageln um die Schalungsplatte beim Ausschalen so entfernen zu können, dass der Schalungskasten in der betonierten Wand oder Decke verbleibt. Einerseits sind die Enden der Schutzrohre während des Betonierens am Schalungskasten befestigt und in den Rohrführungskanälen geführt und anderseits sind sie nach dem Ausschalen im Schalungskasten zugänglich und können durch Herausbiegen an Verteiler angeschlossen werden.

Die aus dem Stand der Technik bekannten Schalungskästen dienen dem Anschliessen von mehreren Schutzrohren weshalb Eintrittsöffnungen an denen kein Schutzrohr angeschlossen wird, separat durch Kappen abgedeckt werden müssen, was den Nachteil des zusätzlichen Aufwands und mehrere zusätzlicher Einzelteile, nämlich der benötigten Kappen, bedarf.

Die EP 2 194 212 A1 offenbart einen Schalungskasten dieser Art bei welchem die Schutzrohre im hinteren Bereich des Schalungskastens durch Rastmittel fixiert werden.

Die DE 43 20 648 A1 offenbart einen Schalungskasten der durch ein Kupplungsteil mit gleichen Schalungskästen erweiterbar ist.

Nachteilig an den oben erwähnten Schalungskästen ist, dass sie jeweils nur für ein Schutzrohr ausgebildet sind und für das Anschliessen weiterer Schutzrohre mit identischen Kästen erweitert werden müssen was das ganze System unstabil macht und zeitaufwendig bei der Montage ist.

Die DE 37 06 936 A1 offenbart ebenfalls einen Schalungskasten mit mehreren Eintrittsöffnungen zum Anschliessen von Schutzrohren, wobei die Einführungsöffnungen in unterschiedlichen Durchmessern am Schalungskasten vorliegen um die unterschiedlich dimensionierten Rohrleitungen anschliessen zu können.

Dies hat den Nachteil, dass nur eine bestimmte Anzahl einer gewissen Grösse einer Einführungsöffnung vorliegt und man dadurch sehr begrenzt in den Möglichkeiten ist sowie auch die Positionierung der jeweiligen Durchmesser zum Anschliessen der Rohre genau vorgegeben ist. Zudem ist kein Dichtungssystem zwischen anzuschliessendem Rohr und Schalungskasten vorgesehen was das Eintreten des flüssigen Betons oder des Betonwassers ermöglichen würde.

Es ist Aufgabe der Erfindung einen Schalungskasten vorzuschlagen der ein Anschliessen von Schutzrohren von unterschiedlichen Durchmessern ohne Limitierung auf gewisse Durchmesser zulässt sowie, dass die Herstellung und Montage wirtschaftlich erfolgt insbesondere durch die Vermeidung von Zusatzteilen und die geforderte Dichtheit gewährleistet.

Diese Aufgabe wird erfindungsgemäss dadurch gelöst, dass die Einführungsöffnungen durch Verschlussscheiben verschlossen sind, wobei die Verschlussscheiben integral an der Eintrittsseite angeordnet sind und das Schalungsgehäuse mit den an der Eintrittsseite angeordneten Verschlussscheiben einteilig ausgebildet ist, wobei die Eintrittsöffnungen Abdichtrosetten zur Gewährleitung der Dichtheit zwischen Schalungsgehäuse und eingeführtem Schutzrohr aufweisen. Weitere erfindungsgemäße Merkmale werden im Anspruch 1 angegeben.

Der erfindungsgemässe Schalungskasten zur Befestigung an einer Schalungsplatte um eine Aussparung in zu betonierende Wände oder Decken vorzusehen, beinhaltend ein Schalungsgehäuse, wobei das Schalungsgehäuse Rohrführungskanäle aufweist. Die Rohrführungskanäle dienen dem Führen der eingelegten Schutzrohre, vorzugsweise verlaufen sie parallel. Um den Platz eines Schalungskasten bzw. die Anordnung der Schutzrohre und der entsprechenden Rohrführungskanäle optimal auszunutzen sind die Rohrführungskanäle versetzt in zwei Ebenen angeordnet.

Das Schalungsgehäuse weist stirnseitig eine Eintrittsseite auf und auf der gegenüberliegenden Seite eine Abschlussseite. Das Schalungsgehäuse ist einteilig ausgebildet und beinhaltet neben der Eintritts- und Austrittsseite auch eine Oberseite die vorzugsweise der Aussenkontur der Schutzrohre entspricht und bogenförmig ausgebildet ist, wobei auch ein ebener Verlauf der Fläche denkbar ist.

Die Eintrittsseite weist zur Einführung der Schutzrohre Eintrittsöffnungen auf. Die Einführungsöffnungen sind durch Verschlussscheiben verschlossen um das Eintreten von flüssigem Beton zu verhindern wenn kein Schutzrohr an die entsprechende Einführungsöffnung angeschlossen wird. Die Verschlussscheiben sind integral an der Eintrittsseite bzw. in der Einführungsöffnung angeordnet.

Das Schalungsgehäuse ist mit an der Eintrittsseite angeordneten Verschlussscheiben, wobei die Verschlussscheiben in den Eintrittsöffnungen angeordnet sind, einteilig ausgebildet. Vorzugsweise wird dies mittels Verbindungsstegen zwischen den Eintrittsöffnungen und den Verschlussscheiben erzielt. Beim Anschliessen eines Schutzrohres an einer Eintrittsöffnung wird die entsprechende Verschlussscheibe durch herausdrücken entfernt und das Schutzrohr kann in den Rohrführungskanal eingezogen werden. Um die Dichtheit zwischen dem eingezogenen Schutzrohr und dem Schalungskasten zu gewährleisten ist in der Eintrittsöffnung eine Abdichtrosette angeordnet. Diese ist vorzugsweise aus einem weichen Kunststoff, welcher sich an den Aussendurchmesser des Schutzrohres anschmiegt um die Dichtheit zu gewährleisten, gebildet. Jeweils die Eintrittsöffnungen wie auch die Verschlussscheiben weisen vorzugsweise alle denselben Durchmesser auf. Dadurch ist ein universelles Anschliessen von diversen Schutzrohren mit unterschiedlichen Durchmessern möglich, wodurch auch nur ein Typ Schalungskasten hergestellt werden muss um die unterschiedlichen Rohrdimensionen abzudecken. Durch die Anordnung der Abdichtrosette in der Eintrittsöffnung werden die unterschiedlichen Durchmesser aufgenommen bzw. überbrückt. Das heisst, wird ein kleinerer Durchmesser eines Schutzrohres eingezogen verbiegt sich die Rosette aus weichem Kunststoff etwas weniger und liegt am Aussendurchmesser des Schutzrohres an, wobei sie sich bei einem grösseren, eingeführten Schutzrohr mehr verbiegt bzw. abbiegt und entsprechend am Aussendurchmesser anliegt.

Eine bevorzugte Ausführungsform besteht darin, dass die Einführungsöffnungen rund ausgebildet sind und die Verschlussscheiben jeweils konzentrisch in den Einführungsöffnungen angeordnet sind, wobei die Verschlussscheiben über Verbindungsstege an der Eintrittsseite bzw. am Innenumfang der Einführungsöffnungen befestigen sind, vorzugsweise sind die Verbindungsstege regelmässig am Umfang der Verschlussscheibe bzw. am Innenumfang der Einführungsöffnung angeordnet. Dadurch bildet sich zwischen dem Aussenumfang der Verbindungsscheibe und dem Innenumfang der Eintrittsöffnung ein segmentartig ringsum verlaufender Spalt. Die Anzahl der Verbindungsstege und der entsprechend dazu gebildeten, segmentartigen Spalten individuell gewählt werden kann, wobei mindestens zwei Verbindungsstege vorzusehen sind. Je mehr Verbindungsstege vorhanden oder auch je massiver die Verbindungsstege ausgebildet sind, desto mehr Druck hält die Verschlussscheibe stand bis sie herausgebrochen wird.

Erfindungsgemäß weist der Schalungskasten an seiner Eintrittsseite eine Dichtungsplattenbaugruppe auf.

Es hat sich als vorteilhaft erwiesen, wenn die Eintrittsseite des Schalungsgehäuses einen ringsum verlaufenden Rahmen aufweist. Der Rahmen ist ebenfalls vorzugsweise integral am Schalungsgehäuse angeordnet bzw. das Schalungsgehäuse ist mit dem Rahmen einteilig ausgebildet. Der Rahmen dient der genauen Ausrichtung bzw. Positionierung der Dichtplattenbaugruppe da diese formschlüssig vom Rahmen umgeben wird und auf der Eintrittsseite des Schalungsgehäuses aufliegt.

Die Erfindung, wie im Anspruch 1 definiert, zeichnet sich auch dadurch aus, dass die Dichtungsplattenbaugruppe eine weiche Dichtmatte und eine harte Deckmatte aufweist, wobei die weiche Dichtmatte im eingebauten Zustand der Dichtungsplattenbaugruppe zwischen der Eintrittsseite des Schalungsgehäuses und der harten Deckmatte angeordnet ist. Es hat sich als vorteilhaft erwiesen, wenn die weiche Dichtmatte einen ringsum verlaufenden Steg aufweist mittels dem die Deckmatte auf der Dichtmatte ausgerichtet bzw. positioniert wird bzw. die weiche Dichtmatte formschlüssig, vorzugsweise durch entsprechend gewinkelte Geometrie der Dichtmatte, um die Deckmatte liegt.

Durch die Anordnung der weichen Dichtmatte um die Kante der harten Deckmatte und das Anbringen auf der Eintrittsseite des Schalungsgehäuses im dafür vorgesehenen Rahmen bringt den Effekt der Selbstjustierung der weichen Dichtmatte mit sich. Das heisst, dass beim Einschieben eines Schutzrohres in die Eintrittsöffnung an der Abdichtrosette mit dem eingeführten Schutzrohr gezogen wird und da die weiche Dichtmatte um die Kanten der Deckmatte liegt wird das Verschieben der Dichtmatte reduziert und durch die Elastizität weicht die Dichtmatte nach den aufgebrachten Kräften während der Montage an ihre Ausgangsposition zurück.

Vorzugsweise ist die weiche Dichtmatte aus TPE und die harte Deckmatte aus PP, dadurch wird zwischen den beiden Matten eine leichte klebende Wirkung bzw. eine chem. Adhäsion erzielt wobei auch andere Materialkombinationen möglich sind.

Vorteilhaft ist es wenn die weiche Dichtmatte und die harte Deckmatte zu den Eintrittsöffnungen in der Eintrittsseite konzentrische Öffnungen aufweisen, wobei beim Durchstossen einer Verschlussscheibe und dem Einführen eines Schutzrohrs die Abdichtrosetten in der weichen Dichtmatte angeordnet sind. Das hat den Vorteil, dass nicht um jede einzelne Einführungsöffnung eine separat ausgebildete Dichtscheibe angeordnet werden muss sondern nur eine Dichtmatte mit den darin vorgesehenen Öffnungen wie auch die Vorteile der Ausrichtung die bereits erwähnt wurden.

Zur Befestigung von Verteilern am Schalungskasten bzw. im Schalungsgehäuse sind Befestigungsmittel vorgesehen in die entsprechende Schrauben mit Halterungen eingeschraubt werden können. Da es unterschiedlich dimensionierte Schrauben gibt die dazu verwendet werden können, sind die Befestigungsmittel im Schalungsgehäuse auch für unterschiedliche Durchmesser ausgebildet. Dazu weist das Befestigungsmittel im Schalungsgehäuse zwei unterschiedliche Durchmesser bzw. Innendurchmesser auf, welche vorzugsweise koaxial hintereinander angeordnet sind, jedoch auch exzentrisch zueinander ausgerichtet sein können. Dadurch entsteht eine Art Stufenbohrung in die die entsprechenden Schrauben mit Halterung eingeschraubt werden können. Werden die kleiner dimensionierten Schrauben eingesetzt wird die untere Bohrung verwendet, werden die grösser dimensionierten Bohrungen eingesetzt kommt die obere Bohrung zum Tragen.

Eine vorteilhafte Ausgestaltung des erfindungsgemässen Schalungskastens hat sich darin gezeigt, dass die Abschlussseite als ebene Fläche ausgebildet ist, welche konzentrisch zu den Rohrführungskanälen Körnungen aufweist. Durch die ebene Fläche und die darin angeordneten Körnungen ist ein Aufbohren der Abschlussseite bei Bedarf durch den Anwender oder bei der Vorfertigung möglich.

Der Schalungskasten weist vorzugsweise einen abnehmbaren Rohrhalter zum Transport der Schutzrohre auf um ein Herausfallen oder Verschieben der Schutzrohre auf der Baustelle zu unterbinden. Der Rohrhalter ist vorzugsweise mittels Zentrierkreuze am Schalungsgehäuse positioniert, durch die Form eines Kreuzes wird eine Zentrierung gewährleistet. Vorzugsweise sind die Zentrierkreuze auch konisch ausgebildet, wodurch eine Selbsthemmung des Rohrhalters entsteht und er durch den Anwender gezielt mit Handkraft entnommen werden kann und nicht ohne weiteres abfallen kann.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Explosionszeichnung eines erfindungsgemässen Schalungskastens,
- Fig. 2: eine Schnittansicht durch einen erfindungsgemässen Schalungskasten,
- Fig. 3: eine ISO-Ansicht auf die Eintrittsseite des Schalungsgehäuses ohne Dichtungsplattenbaugruppe und
- Fig. 4: einen Querschnitt durch eine Einführungsöffnung, wobei die Verschlussscheibe noch nicht entfernt ist.

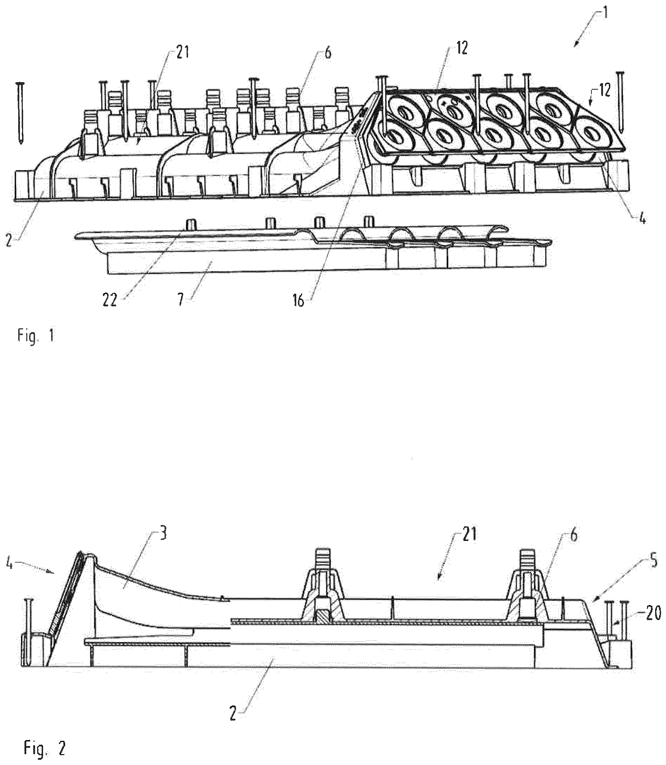

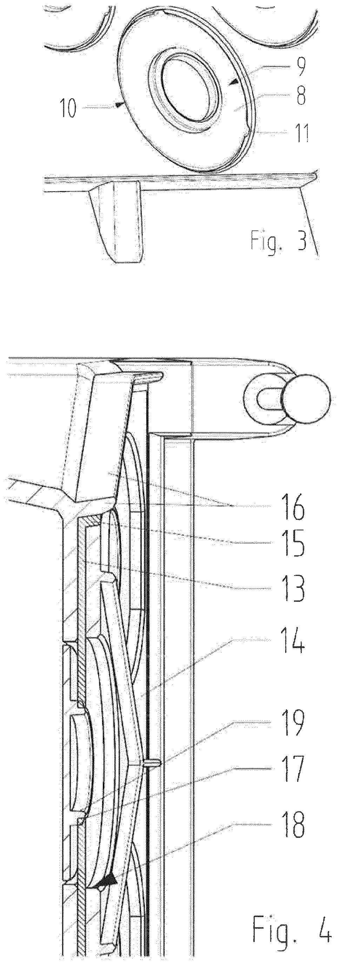

Die in Fig. 1 dargestellte Zeichnung zeigt einen erfindungsgemässen Schalungskasten 1 zur Befestigung an einer Schalungsplatte um eine Aussparung in zu betonierende Wände und Decken vorzusehen. Der Schalungskasten 1 weist ein Schalungsgehäuse 2 auf, welches vorzugsweise durch Spritzgiessen hergestellt ist. Das Schalungsgehäuse 2 weist eine Eintrittsseite 4, eine Austrittseite 5 und eine Oberseite 21 auf, wobei die Oberseite 21 vorzugsweise der Kontur der einzuziehenden Schutzrohre entspricht und somit wellig bzw. formgetreu ausgebildet ist, wobei auch ein ebener Verlauf der Oberseite denkbar wäre. Die einzuziehenden Schutzrohre (nicht dargestellt) werden entlang der Rohrführungskanäle 3, die sich im Schalungsgehäuse 2 parallel zueinander erstrecken, verlegt. Zur Einführung der Schutzrohre in den Schalungskasten 1 dienen die Eintrittsöffnungen 9, welche aus Fig. 3 gut ersichtlich ist und da die Eintrittsseite 4 des Schalungsgehäuses 2 ohne Dichtungsplattenbaugruppe 12 dargestellt ist. Die Eintrittsöffnung 9 ist noch verschlossen dargestellt da die Verschlussscheibe 8 noch in der Eintrittsöffnung 9 angeordnet ist da diese nur herausgedrückt wird, wenn ein Schutzrohr anzuschliessen ist, ansonsten verbleibt die Verschlussscheibe 8 in der Eintrittsöffnung 9. Die Verschlussscheibe 8 ist integral an der Eintrittsseite 4 angeordnet, das heisst, sie ist direkt in der Eintrittsöffnung 9 angeformt bzw. mittels Verbindungsstege 11 mit dem Innendurchmesser der Eintrittsöffnung 9 und letztlich mit dem Schalungsgehäuse 2 verbunden. Selbstverständlich bezieht sich das auf alle Verschlussscheiben 8 die an der Eintrittsseite 4 bzw. in den Eintrittsöffnungen 9 angeordnet sind. Die integrale Verbindung der Verschlussscheibe 8 mit dem Innendurchmesser der Eintrittsöffnung 9 wird vorzugsweise über Verbindungsstege 11 gelöst, wie bereits erwähnt. Um den Aussenumfang der Verschlussscheiben 8 sind vorzugsweise regelmässig angeordnete Verbindungsstege 11 angeordnet, welche mit dem Innendurchmesser der Eintrittsöffnung 9 verbunden sind, dadurch ergeben sich zwischen den Verbindungsstegen 11 Spalten 10, die konzentrisch um die Verschlussscheibe 8 verlaufen. Die Anzahl der Verbindungsstege 11 und die Breite solcher Stege 11 ist individuell, je mehr Verbindungsstege 11 an der Verschlussscheibe 8 angeordnet sind, desto mehr Druck bzw. Kraft hält die Verschlussscheibe 8 stand bis sie herausgedrückt wird. Das Schalungsgehäuse 2 mit den an der Eintrittsseite 4 angeordneten Eintrittsöffnungen 9 und den darin angeordneten Verschlussscheiben 8 ist einteilig ausgebildet. Auf der Eintrittsseite 4 ist die Dichtungsplattenbaugruppe 12 angeordnet, wobei diese durch den Rahmen 16 an der Eintrittsseite 4 genau positioniert und formschlüssig aufgenommen ist. Die Dichtungsplatte 12 setzt sich aus einer weichen Dichtmatte 13 und einer harten Deckmatte 14 zusammen, wobei die weiche Dichtmatte 13 zwischen der Eintrittsseite 4 des Schalungsgehäuses 2 und der Deckmatte 14, bzw. in Endposition, angeordnet ist. Aus Fig. 4 sind die Schichten der Eintrittsseite 4, der Dichtungsmatte 13 und der Deckmatte 14 ersichtlich, zum Zeitpunkt wenn die Verschlussscheibe 8 noch nicht entfernt wurde. Vorzugsweise kann die Deckmatte 14 Verstrebungen zur Verstärkung aufweisen. Die Dichtungsplattenbaugruppe 12 wird vorzugsweise mittels Schnappverschlüssen an der Eintrittsseite 4 befestigt. Es ist gut zu erkennen, dass die weiche Dichtmatte 13 die Spalten 10 zwischen dem Aussendurchmesser der Verschlussscheibe 8 und dem Innendurchmesser der Eintrittsöffnung 9 überdeckt und somit das Eindringen des Betons verhindert. Die Dichtmatte 13 weist zu den Eintrittsöffnungen 9 konzentrische Öffnungen 17 auf, wie auch die Deckmatte 14 konzentrische Öffnungen 18 aufweist um das Schutzrohr einführen zu können. Wird die Verschlussscheibe 8 dann entfernt, bildet die Abdichtrosette 19 eine Abdichtung zwischen dem eingeführten Schutzrohr und den Schalungsgehäuse 2. Die an der Eintrittsseite 4 angeordneten Eintrittsöffnungen 9 weisen vorzugsweise alle denselben Durchmesser auf sowie auch die Öffnungen 17, 18 der Deck- und Dichtmatte 13, 14 jeweils denselben Durchmesser aufweisen. Als vorteilhaft hat sich erwiesen, wenn die Dichtmatte 13 einen Steg 15 aufweist der die Deckmatte 14 umgibt, in Fig. 4 ist das gut ersichtlich. Das dient neben einer optimalen Abdichtung auch dem Positionieren der Dichtmatte 13 und dem Ausrichten der Öffnungen 17, 18 und der Eintrittsöffnungen 9 zueinander. Zudem justiert sich die Dichtmatte 13 mit Hilfe des Stegs 15 wieder selbst, wenn sie durch den Zug bzw. Kraftaufwand, der durch das Einführen eines Schutzrohres verursacht wurde, verschoben wurde.

Um den Schalungskasten 1 auf der Schalungsplatte zu befestigen werden vorzugsweise Nägel 23 eingesetzt, wobei auch andere Befestigungsmittel verwendet werden können, wichtig hierbei ist nur, dass sich die Schalungsplatte beim Ausschalen entfernen lässt ohne den Schalungskasten mitzureissen da der in der Betonwand bzw. Decke zu verbleiben hat.

Um Verteiler, an welchen die Schutzrohre befestigt werden im Schalungskasten 1 zu befestigen weist das Schutzgehäuse 2 Befestigungsmittel 6 auf. Diese sind als eine Art zweistufige Dübel ausgebildet. In der Regel werden Schrauben mit Halterungen zur Befestigung der Verteiler vorgesehen. Da diese Schrauben nicht standardisiert sind können unterschiedliche Schraubendurchmesser eingesetzt werden, deshalb ist das Befestigungsmittel 6 zweistufig ausgebildet, das heisst, dass die Befestigungsmittel 6 mindestens zwei koaxial nacheinander angeordnete zylinderförmige Bohrungen aufweisen. Die obere Bohrung im Befestigungsmittel 6 weist einen grösseren Durchmesser auf und dient der Aufnahme grösserer Schrauben zur Befestigung von Verteilern. Die tiefer angeordnete Bohrung hat einen geringeren Durchmesser und dient dem Anschrauben von kleiner dimensionierten Schrauben.

In Figur 1 ist die Rohrhalterung 7 ersichtlich, wobei diese nur zur Vorpositionierung bei der Montage dient, damit die Schutzrohre nicht aus ihren Rohrführungskanälen 3 treten können. Nach Aushärten des Beton und der darauffolgenden Demontage der Schalung, wird der Rohrhalter zur Zugänglichkeit der Schutzrohre und zum weiteren Anschliessen eines Verteilers entfernt. Die Positionskreuze 22 sind derart ausgelegt, dass die Rohrhalterung 7 als Transportsicherung und zum Stabilisieren der Baugruppe bis nach der Montage auf der Baustelle, dem Aushärten sowie der anschliessenden Demontage der Schalung durch den Anwender dient. Durch einfache Handkraftbetätigung kann die Rohrhalterung 7 herausgenommen werden, um die Anschlussarbeiten durchführen zu können. Für eine genaue und einfache Positionierung des Rohrhalters 7 dienen die Positionierkreuze 22, welche in den entsprechenden Bohrungen am Schalungsgehäuse 2 aufgenommen werden. Vorzugsweise sind die Positionierkreuze 22 konisch ausgebildet was eine Selbsthemmung bewirkt und der Rohrhalter 7 nicht ohne weiteres Zutun vom Schalungsgehäuse 2 abfällt.

An der Abschlussseite 5 des Schalungsgehäuses 2, welche vorzugsweise als ebene Fläche ohne Abstufungen ausgebildet ist, sind Körnungen 20 angeordnet. Diese dienen dem möglichen Vorsehen von Bohrungen resp. Öffnungen um bei Bedarf das Schutzrohr durch den Schalungskasten 1 hindurchzuführen um eine Abpressprüfung auch vordem Betonieren, einfach gewährleisten zu können.

### Bezugszeichenliste

- 1: Schalungskasten
- 2: Schalungsgehäuse
- 3: Rohrführungskanal
- 4: Eintrittsseite
- 5: Abschlussseite
- 6: Befestigungsmittel
- 7: Rohrhalter
- 8: Verschlussscheibe
- 9: Eintrittsöffnung
- 10: Spalt
- 11: Verbindungssteg
- 12: Dichtungsplattenbaugruppe
- 13: Weiche Dichtmatte
- 14: Harte Deckmatte
- 15: Steg, weiche Dichtmatte
- 16: Rahmen, Eintrittsseite
- 17: Öffnung in weicher Dichtmatte
- 18: Öffnung in harter Deckmatte
- 19: Abdichtrosette
- 20: Körnung
- 21: Oberseite
- 22: Positionskreuz
- 23: Nägel

## Patentansprüche

1. Schalungskasten (1) zur Befestigung an einer Schalungsplatte um eine Aussparung in zu betonierende Wände oder Decken vorzusehen, beinhaltend ein Schalungsgehäuse (2), wobei das Schalungsgehäuse (2) Rohrführungskanäle (3) aufweist, wobei die Rohrführungskanäle (3) der Führung von eingeführten Schutzrohren dienen, wobei das Schalungsgehäuse (2) eine Eintrittsseite (4) und eine Abschlussseite (5) aufweist und einteilig ausgebildet ist, wobei die Eintrittsseite (4) Eintrittsöffnungen (9) zur Einführung der Schutzrohre aufweist, wobei die Eintrittsöffnungen (9) Abdichtrosetten (19) zur Gewährleistung der Dichtheit zwischen Schalungsgehäuse (2) und eingeführtem Schutzrohr aufweisen, **dadurch gekennzeichnet, dass** die Einführungsöffnungen (9) durch Verschlussscheiben (8) verschlossen sind, wobei die Verschlussscheiben (8) integral an der Eintrittsseite (4) angeordnet sind und das Schalungsgehäuse (2) mit den an der Eintrittsseite (4) angeordneten Verschlussscheiben (8) einteilig ausgebildet ist, und dass an der Eintrittsseite (4) eine Dichtungsplattenbaugruppe (12) angeordnet ist, wobei die Dichtungsplattenbaugruppe (12) eine weiche Dichtmatte (13) und eine harte Deckmatte (14) aufweist, wobei die weiche Dichtmatte (13) zwischen der Eintrittsseite (4) des Schalungsgehäuses (2) und der harten Deckmatte (14) angeordnet ist.

2. Schalungskasten (1) nach Anspruch 1, **dadurch gekennzeichnet, dass** die an der Eintrittsseite (4) angeordneten Einführungsöffnungen (9) identische Durchmesser aufweisen.

3. Schalungskasten (1) nach Anspruch 1, **dadurch gekennzeichnet, dass** die Einführungsöffnungen (9) entsprechend der Geometrie den einzuführenden Schutzrohren vorzugsweise rund ausgebildet sind und die Verschlussscheiben (8) jeweils mittig vorzugsweise konzentrisch in den Einführungsöffnungen (9) angeordnet sind, wobei die Verschlussscheiben (8) über Verbindungsstege (11) an der Eintrittsseite (4) befestigt sind, vorzugsweise sind die Verbindungsstege (11) am Umfang der Verschlussscheibe (8) bzw. am Innenumfang der Einführungsöffnung (9) angeordnet vorzugsweise regelmässig beanstandet zueinander.

4. Schalungskasten (1) nach Anspruch 3, **dadurch gekennzeichnet, dass** die Eintrittsseite (4) einen ringsum verlaufenden Rahmen (16) aufweist der die Dichtplattenbaugruppe (12) in Endposition umgibt.

5. Schalungskasten (1) nach Anspruch 4, **dadurch gekennzeichnet, dass** die weiche Dichtmatte (13) einen ringsum verlaufenden Steg (15) aufweist mittels dem die Deckscheibe (14) auf der Dichtmatte (13) ausgerichtet bzw. positioniert wird.

6. Schalungskasten (1) nach einem der Ansprüche 4 oder 5, **dadurch gekennzeichnet, dass** die weiche Dichtmatte (13) und die harte Deckmatte (14) zu den Eintrittsöffnungen (9) konzentrische Öffnungen (17, 18) aufweisen, wobei beim Durchstossen und somit entfernen der Verschlussscheiben (8) die Abdichtrosetten (19) in der weichen Dichtmatte (13) freigelegt sind.

7. Schalungskasten (1) nach Anspruch 1, **dadurch gekennzeichnet, dass** das Schalungsgehäuse (2) Befestigungsmittel (6) für unterschiedliche Durchmesser aufweist, wobei die Befestigungsmittel (6) mindestens zwei koaxial oder exzentrischen, nacheinander angeordnete Bohrungen mit unterschiedlichen Durchmessern aufweist, wobei die Befestigungsmittel (6) der Befestigung von Verteilern an welchen die Schutzrohre befestigt werden, dienen.

8. Schalungskasten (1) nach Anspruch 1, **dadurch gekennzeichnet, dass** die Abschlussseite (5) als ebene Fläche ausgebildet ist, welche konzentrisch zu den Rohrführungskanälen (3) Körnungen (20) aufweist, wobei die Körnungen einem möglichen Vorsehen von Bohrungen dienen.

9. Schalungskasten nach Anspruch 1, **dadurch gekennzeichnet, dass** der Schalungskasten (1) einen abnehmbaren Rohrhalter (7) aufweist, wobei der Rohrhalter (7) vorzugsweise mittels Zentrierkreuze (22) am Schalungsgehäuse (2) positioniert ist.

## Claims

1. Formwork box (1) for fastening to a formwork panel in order to provide a cutout in walls or ceilings to be concreted, comprising a formwork housing (2), wherein the formwork housing (2) has pipe-guiding channels (3), wherein the pipe-guiding channels (3) are used for guiding introduced protective pipes, wherein the formwork housing (2) has an inlet side (4) and a termination side (5) and is of one-part configuration, wherein the inlet side (4) has inlet openings (9) for the introduction of the protective pipes, wherein the inlet openings (9) have sealing rosettes (19) for ensuring the tightness between the formwork housing (2) and the introduced protective pipe, **characterized in that** the introduction openings (9) are closed by closure discs (8), wherein the closure discs (8) are arranged integrally on the inlet side (4) and the formwork housing (2) is of one-part configuration with the closure discs (8) which are arranged on the inlet side (4), and **in that** a seal plate assembly (12) is arranged on the inlet side (4), wherein the seal plate assembly (12) has a soft sealing mat (13) and a hard cover mat (14), wherein the soft sealing mat (13) is arranged between the inlet side (4) of the formwork housing (2) and the hard cover mat (14).

2. Formwork box (1) according to Claim 1, **characterized in that** the introduction openings (9) which are arranged on the inlet side (4) have identical diameters.

3. Formwork box (1) according to Claim 1, **characterized in that** the introduction openings (9) are preferably of round configuration so as to correspond to the geometry of the protective pipes to be introduced, and the closure discs (8) are arranged in each case centrally, preferably concentrically, in the introduction openings (9), wherein the closure discs (8) are fastened to the inlet side (4) by way of connecting webs (11), the connecting webs (11) being preferably arranged on the circumference of the closure disc (8) or on the inner circumference of the introduction opening (9), preferably at a regular spacing from each other.

4. Formwork box (1) according to Claim 3, **characterized in that** the inlet side (4) has a frame (16) which extends all the way around it and which surrounds the seal plate assembly (12) in the end position.

5. Formwork box (1) according to Claim 4, **characterized in that** the soft sealing mat (13) has a web (15) which extends all the way around it and by means of which the cover mat (14) is oriented or positioned on the sealing mat (13).

6. Formwork box (1) according to either of Claims 4 and 5, **characterized in that** the soft sealing mat (13) and the hard cover mat (14) have openings (17, 18) which are concentric with respect to the inlet openings (9), wherein, when the closure discs (8) are penetrated and thus removed, the sealing rosettes (19) in the soft sealing mat (13) are exposed.

7. Formwork box (1) according to Claim 1, **characterized in that** the formwork housing (2) has fastening means (6) for different diameters, wherein the fastening means (6) have at least two bores which are arranged coaxially or eccentrically in succession and which have different diameters, wherein the fastening means (6) are used for the fastening of distributors to which the protective pipes are fastened.

8. Formwork box (1) according to Claim 1, **characterized in that** the termination side (5) is configured as a flat surface which has grains (20) which are concentric with respect to the pipe-guiding channels (3), wherein the grains are used for a possible provision of bores.

9. Formwork box according to Claim 1, **characterized in that** the formwork box (1) has a removable pipe holder (7), wherein the pipe holder (7) is preferably positioned on the formwork housing (2) by means of centring crosses (22).

## Revendications

1. Caisson de coffrage (1) pour la fixation à une plaque de coffrage afin de prévoir un évidement dans des parois ou des plafonds à bétonner, comprenant un boîtier de coffrage (2), le boîtier de coffrage (2) présentant des canaux de guidage de tubes (3), les canaux de guidage de tubes (3) servant au guidage de tubes de protection insérés, le boîtier de coffrage (2) présentant un côté d'entrée (4) et un côté de fermeture (5) et étant réalisé d'une seule pièce, le côté d'entrée (4) présentant des ouvertures d'entrée (9) pour l'introduction des tubes de protection, les ouvertures d'entrée (9) présentant des rosaces d'étanchéité (19) pour garantir l'étanchéité entre le boîtier de coffrage (2) et le tube de protection inséré, **caractérisé en ce que** les ouvertures d'introduction (9) sont fermées par des disques de fermeture (8), les disques de fermeture (8) étant disposés intégralement au niveau du côté d'entrée (4) et le boîtier de coffrage (2) étant réalisé d'une seule pièce avec les disques de fermeture (8) disposés au niveau du côté d'entrée (4), et **en ce qu'**un module de plaque d'étanchéité (12) est disposé au niveau du côté d'entrée (4), le module de plaque d'étanchéité (12) présentant un tapis d'étanchéité souple (13) et un tapis de recouvrement dur (14), le tapis d'étanchéité souple (13) étant disposé entre le côté d'entrée (4) du boîtier de coffrage (2) et le tapis de recouvrement dur (14).

2. Caisson de coffrage (1) selon la revendication 1, **caractérisé en ce que** les ouvertures d'introduction (9) disposées au niveau du côté d'entrée (4) présentent des diamètres identiques.

3. Caisson de coffrage (1) selon la revendication 1, **caractérisé en ce que** les ouvertures d'introduction (9) sont réalisées de manière correspondant à la géométrie des tubes de protection à introduire, de préférence sous forme ronde, et les disques de fermeture (8) sont à chaque fois disposés centralement, de préférence concentriquement, dans les ouvertures d'introduction (9), les disques de fermeture (8) étant fixés au côté d'entrée (4) par le biais de nervures de liaison (11), de préférence les nervures de liaison (11) étant disposées au niveau de la périphérie du disque de fermeture (8) ou au niveau de la périphérie intérieure de l'ouverture d'introduction (9), de préférence étant espacées régulièrement les unes des autres.

4. Caisson de coffrage (1) selon la revendication 3, **caractérisé en ce que** le côté d'entrée (4) présente un cadre (16) s'étendant sur le pourtour, qui entoure, dans la position finale, le module de plaque d'étanchéité (12).

5. Caisson de coffrage (1) selon la revendication 4, **caractérisé en ce que** le tapis d'étanchéité souple (13) présente une nervure (15) s'étendant sur le pourtour, au moyen de laquelle le disque de recouvrement dur (14) est orienté ou positionné sur le tapis d'étanchéité (13).

6. Caisson de coffrage (1) selon l'une quelconque des revendications 4 et 5, **caractérisé en ce que** le tapis d'étanchéité souple (13) et le tapis de recouvrement dur (14) présentent des ouvertures (17, 18) concentriques par rapport aux ouvertures d'entrée (9), les rosaces d'étanchéité (19) dans le tapis d'étanchéité souple (13) étant exposées lors du perçage et par conséquent de l'enlèvement des disques de fermeture (8).

7. Caisson de coffrage (1) selon la revendication 1, **caractérisé en ce que** le boîtier de coffrage (2) présente des moyens de fixation (6) pour différents diamètres, les moyens de fixation (6) présentant au moins deux alésages coaxiaux ou excentriques, disposés les uns derrière les autres, avec des diamètres différents, les moyens de fixation (6) servant à la fixation de répartiteurs au niveau desquels sont fixés les tubes de protection.

8. Caisson de coffrage (1) selon la revendication 1, **caractérisé en ce que** le côté de fermeture (5) est réalisé sous forme de surface plane qui présente, concentriquement par rapport aux canaux de guidage de tubes (3), des granularités (20), les granularités servant à prévoir éventuellement des alésages.

9. Caisson de coffrage selon la revendication 1, **caractérisé en ce que** le caisson de coffrage (1) présente un support de tube amovible (7), le support de tube (7) étant de préférence positionné au moyen de croisillons de centrage (22) sur le boîtier de coffrage (2).
